# EUROPEAN PATENT SPECIFICATION

(11) **EP 4 470 179 B1**
(45) Date of publication and mention of the grant of the patent: **11.11.2026**
(21) Application number: 23746587.7
(22) Date of filing: 31.01.2023
(51) Int. Cl.: H04L 43/04, H04L 9/40, G06F 21/50, G06F 21/55, H04L 67/306, G06F 16/24, G06F 16/901

(54) **TECHNIQUES FOR CLOUD COMPUTING FORENSICS UTILIZING A SECURITY GRAPH**
VERFAHREN FÜR CLOUD-COMPUTING-FORENSIK UNTER VERWENDUNG EINES SICHERHEITSGRAPHEN
TECHNIQUES POUR LA CRIMINALISTIQUE D'INFORMATIQUE EN NUAGE UTILISANT UN GRAPHE DE SÉCURITÉ

(30) Priority: 31.01.2022 US 202263267365 P
(43) Date of publication of application: 04.12.2024
(73) Proprietor: Wiz, Inc., New York, NY 10001 (US)
(72) Inventor: LUTTWAK, Ami, New York, New York 10001 (US); COSTICA, Yinon, New York, New York 10001 (US); REZNIK, Roy, New York, New York 10001 (US); PISHA, George, New York, New York 10001 (US); MOYSI, Liran, New York, New York 10001 (US); SCHINDEL, Alon, New York, New York 10001 (US)
(74) Representative: Lohmanns Lohmanns & Partner mbB
(86) International application number: PCT/IB2023/050849
(87) International publication number: WO 2023/144806

(56) References cited:
- CN-A- 105 897 715
- US-A1- 2019 260 764
- US-A1- 2021 203 684
- US-A1- 2021 234 889
- US-B1- 10 924 503

## Description

### CROSS-REFERENCE TO RELATED APPLICATIONS

This application claims the benefit of U.S. Provisional Application No. 63/267,365 filed on January 31, 2022.

### TECHNICAL FIELD

The present disclosure relates generally to cloud computing, and more specifically to performing forensic analysis in a cloud computing environment.

### BACKGROUND

Cloud computing technologies have allowed to abstract away hardware considerations in a technology stack. For example, computing environments such as Amazon^{®} Web Services (AWS), or Google Cloud Platform (GCP) allow a user to implement a wide variety of software and provide the relevant hardware, with the user only paying for what they need. This shared provisioning has allowed resources to be better utilized, both for the owners of the resources, and for those who wish to execute software applications and services which require those resources.

This technology however does not come without its disadvantages. As the computing environment is now physically outside of an organization, and exposed in terms of access to and from the computing environment, vulnerabilities may be more likely to occur.

While many solutions exist which attempt to block cyberattacks, the reality is that at least some of these attacks will inevitably be successful. An attack may be, for example, unauthorized access to sensitive information, such as information stored in a database. Attacks can be categorized based on severity, for example an attack that merely allows the attacker to see that a file exists on a workload is probably less severe than an attack which allows the attacker to view, or download, that same file.

Digital forensics, or cybersecurity forensics, is a field of art which includes actions that attempt to identify what an attacker was able to accomplish in a computing environment which was attacked. Typically, an individual who has knowledge of the computing environment will manually examine workloads to attempt to discover the extent of damage performed by an attacker, if at all such damage exists. This process requires specialized knowledge which is not easily transferable, and is labor intensive in terms of human hours. US 2021/203684 A1 and US 2021/234889 A1 are relevant prior art documents.

It would therefore be advantageous to provide a solution that would overcome the challenges noted above.

### SUMMARY

The invention is defined by the independent claims and preferred embodiments are defined by the dependent claims. A summary of several example embodiments of the disclosure follows. This summary is provided for the convenience of the reader to provide a basic understanding of such embodiments and does not wholly define the breadth of the disclosure. This summary is not an extensive overview of all contemplated embodiments, and is intended to neither identify key or critical elements of all embodiments nor to delineate the scope of any or all aspects. Its sole purpose is to present some concepts of one or more embodiments in a simplified form as a prelude to the more detailed description that is presented later. For convenience, the term "some embodiments" or "certain embodiments" may be used herein to refer to a single embodiment or multiple embodiments of the disclosure.

Certain embodiments disclosed herein include a method for generating a compact forensic event log based on a cloud log. The method also includes traversing a security graph to detect a node representing a cloud entity in a cloud computing environment, where the security graph includes a representation of the cloud computing environment; detecting a node representing a cybersecurity threat connected to the node representing the cloud entity; parsing a cloud log of the cloud computing environment to detect a data record, the data record including an attribute of the node representing the cloud entity; and generating a compact forensic event log including the detected data record.

Certain embodiments disclosed herein also include a non-transitory computer readable medium having stored thereon causing a processing circuitry to execute a process, the process comprising: traversing a security graph to detect a node representing a cloud entity in a cloud computing environment, where the security graph includes a representation of the cloud computing environment; detecting a node representing a cybersecurity threat connected to the node representing the cloud entity; parsing a cloud log of the cloud computing environment to detect a data record, the data record including an attribute of the node representing the cloud entity; and generating a compact forensic event log including the detected data record.

Certain embodiments disclosed herein also include a system for generating a compact forensic event log based on a cloud log. The system also includes a processing circuitry. The system also includes a memory, the memory containing instructions that, when executed by the processing circuitry, configure the system to: traverse a security graph to detect a node representing a cloud entity in a cloud computing environment, where the security graph includes a representation of the cloud computing environment; detect a node representing a cybersecurity threat connected to the node representing the cloud entity; parse a cloud log of the cloud computing environment to detect a data record, the data record including an attribute of the node representing the cloud entity; and generate a compact forensic event log including the detected data record.

### BRIEF DESCRIPTION OF THE DRAWINGS

The subject matter disclosed herein is particularly pointed out and distinctly claimed in the claims at the conclusion of the specification. The foregoing and other objects, features, and advantages of the disclosed embodiments will be apparent from the following detailed description taken in conjunction with the accompanying drawings.
Figure 1 is a network diagram utilized to describe the various disclosed embodiments.
Figure 2 is a network log of a cloud based computing environment, in accordance with an embodiment.
Figure 3 is a role log of a could computing environment, in accordance with an embodiment.
Figure 4 is another role log of a cloud based computing environment, in accordance with an embodiment.
Figure 5 is security graph, implemented in accordance with an embodiment.
Figure 6 is a flowchart of a method for generating a forensic analysis report based on a security graph, implemented in accordance with an embodiment.
Figure 7 is a schematic diagram of a forensic analyzer according to an embodiment.

### DETAILED DESCRIPTION

It is important to note that the embodiments disclosed herein are only examples of the many advantageous uses of the innovative teachings herein. In general, statements made in the specification of the present application do not necessarily limit any of the various claimed embodiments. Moreover, some statements may apply to some inventive features but not to others. In general, unless otherwise indicated, singular elements may be in plural and vice versa with no loss of generality. In the drawings, like numerals refer to like parts through several views.

The various disclosed embodiments include a method and system for generating a compact forensic log based on cloud logs and a security graph. Cloud entities detected in cloud logs, such as network logs and role logs, can be referenced in a security log to determine if an exploitation occurred. In certain embodiments, the forensic analysis output is stored in place of a cloud log. This is advantageous as a cloud log often requires a large amount of storage as it can easily include millions of events. By storing smaller, relevant logs, which include only records which are relevant, for example, to vulnerable resources, storage space is saved, while ensuring that the most relevant information remains stored.

Furthermore, in some embodiments where a user reviews forensic events, the amount of information that needs to be manually sifted through is reduced significantly, to determine if a vulnerability resulted in an exploitation of the same. A cloud log may contain, even for a small window of time, a massive amount of information which is time consuming for a human to sift through, in order to find an indication that a vulnerability was exploited. By determining what are relevant events based on a security graph, and only providing the relevant events to the user, the amount of information which the user sifts through is reduced, and therefore it is beneficial.

In this regard, it is noted that a user can detect forensic events in a cloud log. In fact, it is often the case that a user does indeed sift through a cloud log to detect a forensic event. However, not only is this inefficient, it is not possible for a human to reliably and consistently be able to detect relevant events in a cloud log as the sheer number of events make this task impossible.

Furthermore, even if a human were somehow able to do so, it would require maintaining a persistent copy of the events (i.e., stored in a storage) while the user sifts through each and every event and checks each data field of a record of the event to a checked value. Therefore, detecting cybersecurity threats in a security graph and generating a compact log which includes only events which are potentially relevant to a forensic analysis is useful because it greatly reduces the amount of storage (e.g., by storing only relevant events) and reduces the amount of event logs which a human needs to manually review. Further, it would eliminate the need for a persistent copy of events other than the events which are relevant for the forensic log.

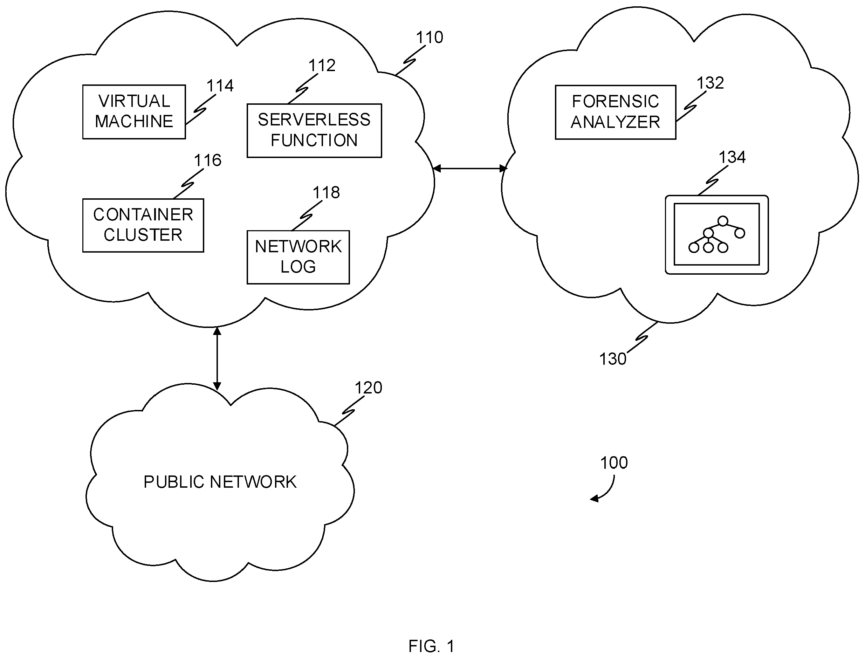

Fig. 1 is an example network diagram 100 utilized to describe the various disclosed embodiments. In the example network diagram 100, two cloud environments are shown for simplicity, though it should be readily apparent that different configurations of computing environments may be utilized without departing from the scope of this disclosure.

In an embodiment, a production environment 110 is implemented on a first cloud computing environment. The first cloud computing environment is, according to an embodiment, deployed on a cloud computing infrastructure such as Amazon^{®} Web Services (AWS), Google^{®} Cloud Platform (GCP), Microsoft^{®} Azure, and the like. A production environment 110 is a computing environment which provides resources, services, and the like, for example to client devices.

In certain embodiments, the production environment 110 is implemented as a virtual private cloud (VPC) in AWS, as a Virtual Network (VNet) in Azure, and the like. A production environment 110 is utilized as the main environment from which an organization operates, and may provide services, according to an embodiment. This is to differentiate, in certain embodiments, from a staging environment, which is substantially identical to the production environment, but is used for testing purposes in order to test services, workloads, policies, and the like, before implementing them in a production environment.

In an embodiment, the production environment 110 includes a plurality of resources. A resource is a cloud entity which provides a service, exposes a hardware resource (e.g., a processor, a memory, a storage, and the like), performs an action in a cloud computing environment, and the like. In an embodiment, the resource is a workload, such as a serverless function 112, a virtual machine 114, a software container cluster 116, and the like. In some embodiments the resource is a software application deployed on a workload, an appliance, a web server, a gateway, a web application firewall, and the like. In an embodiment, the production environment 110 includes a plurality of each of a different resource type. In some embodiments, a serverless function 112 is, for example, Amazon^{®} Lambda, a virtual machine 114 is, for example, Oracle^{®} VirtualBox, and a software container cluster 116 is implemented, for example using a Kubernetes^{®} platform, Docker^{®} Engine, and the like.

In some embodiments, the production environment 110 includes a principal (not shown). In an embodiment, a principal is a cloud entity which is authorized to operate on a resource, initiate an action in the production environment 110, initiate an operation on a resource, a combination thereof, and the like. In certain embodiments, a resource is also a principal, for example when operating on another resource. According to an embodiment, a principal is, for example, a user account, a service account, a role, and the like.

In certain embodiments, a workload in the production environment 110 is configured to generate activity which is logged in a network log 118. A network log 118 is implemented, according to an embodiment, as a file that contains events (also referred to as data records), which correspond to actions by one or more applications. In an embodiment, an event is, for example, a user call to an object in the production environment 110, a process call to an object, an authentication attempt, an access request, and the like.

In an embodiment, a service, for example implemented as a serverless function 112, is configured to generate a network log 118 (which is a type of cloud log). The service is configured to monitor at least a workload in the production environment 110 and write events to the network log 118. In an embodiment, an event is added to the network log 118 as a record, for example based on a predetermined data structure.

In some embodiments, the production environment 110 is communicatively coupled with a public network 120, such as the Internet, and an inspection environment 130. The inspection environment 130 is implemented, in an embodiment, as a VPC deployed on a cloud computing infrastructure, such as AWS. In an embodiment, the production environment 110 and the inspection environment 130 are deployed using the same cloud computing infrastructure.

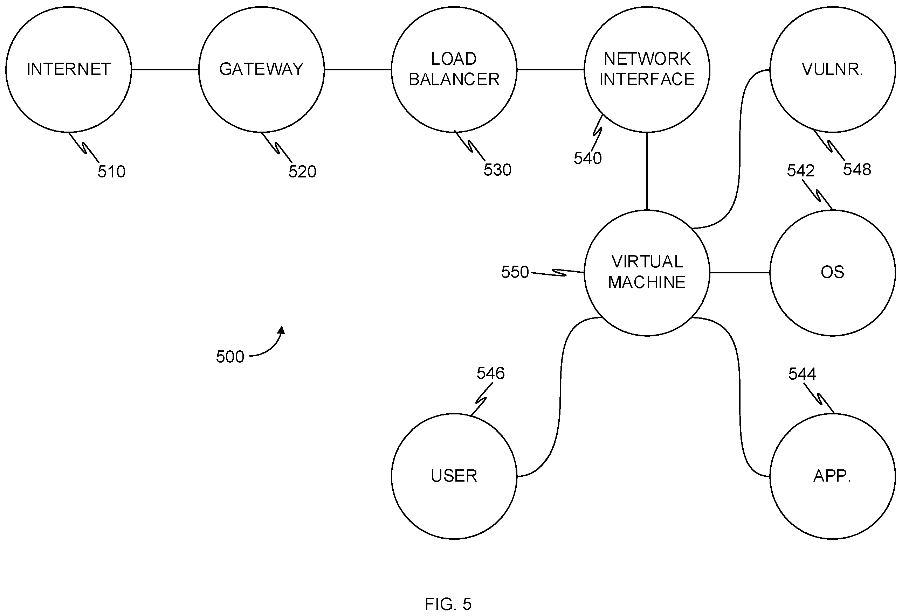

In certain embodiments, the inspection environment 130 includes a forensic analyzer 132, and a security graph 134. The security graph 134 is discussed in more detail with respect to Fig. 5 below, which is an example of a portion of a security graph. In an embodiment, the security graph 134 is stored on a graph database, such as Neo4j^{®}. In an embodiment, the inspection environment 130 further includes a plurality of inspector workloads (not shown), each inspector configured to detect a cybersecurity object in a workload of the production environment. According to an embodiment, a cybersecurity object is a malware object, a password, a certificate, an application, a vulnerability, an exposure, a misconfiguration, a combination thereof, and the like. In an embodiment, the forensic analyzer 132 is implemented as a workload, such as a node in a software container.

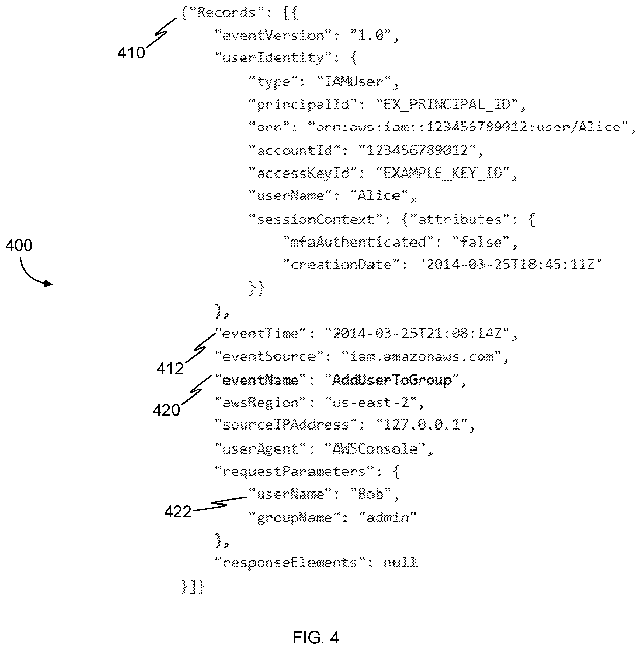

The forensic analyzer 132 is configured to access cloud logs, network logs, and the security graph 134. The forensic analyzer 132 may generate a forensic report based on any of: cloud logs, network logs, the security graph, and a combination thereof. The forensic report includes, in an embodiment, a portion extracted from a cloud log, a portion extracted from a network log, and the like, wherein the extracted portions are based on an identifier of a cloud entity. An example of a method for generating a forensic report is described in more detail below with respect to Fig. 4.

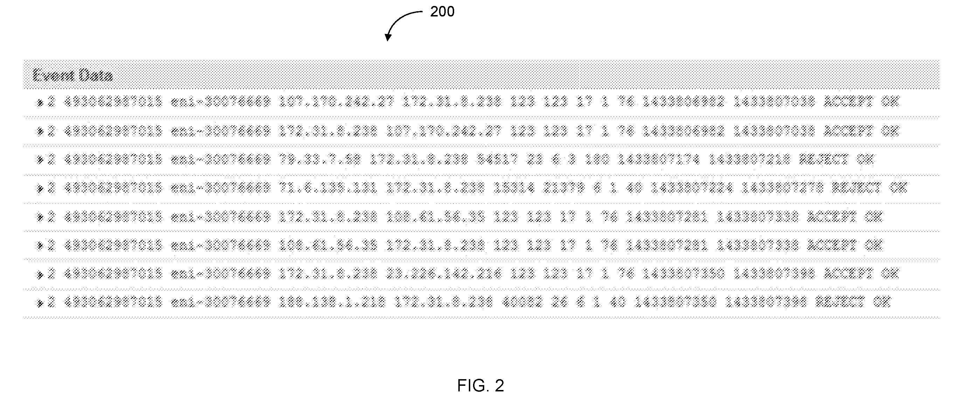

Fig. 2 is an example of a network log 200 of a cloud based computing environment, in accordance with an embodiment. In an embodiment, a network log 200 (a type of cloud log) includes a plurality of events, each event recorded as a row in the log. According to some embodiments, an record includes a plurality of data fields and their values. In an embodiment, an order of a plurality of data fields corresponds to a data structure. In certain embodiments, a data field is, for example, an account identifier, an interface identifier, a source address and a destination address (for network messages), a port, a protocol, a number of bytes transferred, a number of packets transferred, an action (e.g. accept, reject, etc.), a combination thereof, and the like.

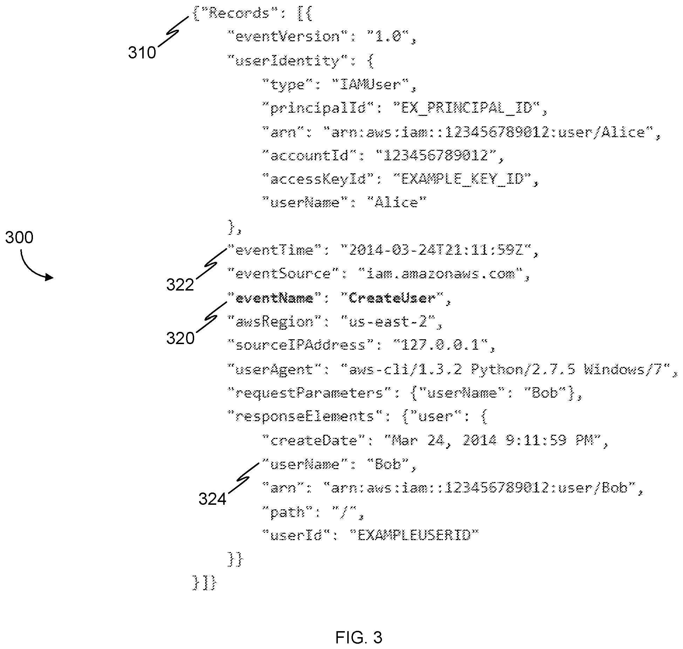

Fig. 3 is an example of a role log 300 of a cloud computing environment, utilized to describe an embodiment. In an embodiment, a role log includes data records which relate to events based on identifiers of principals. In certain embodiments, the role log 300 includes records generated based on events which are associated with user accounts, service accounts, roles, and the like.

For example, according to an embodiment, a first record 310 includes an event by which a new user account was created. The first record 310 includes a plurality of data fields, each data field having a value. In some embodiments, the data field values are unique to an event. For example, the event has an event name 320, which indicates that the event is related to creating a user account, at an event time 322. Other identifiers, such as the username 324 of the created user account are also recorded.

Fig. 4 is another example of a role log 400 of a cloud based computing environment, utilized to describe an embodiment. In an embodiment, a role log 400 includes a second record 410, which indicates that a user "Alice" which previously (based on the event time 412) created a user account "Bob", added the user account "Bob" to an "Admin" group. The event name 420 indicates that the user account 422 was added to an admin group. Adding administrator accounts is not common, and if it is performed through a machine that includes a vulnerability, as explained herein, this may be an indication that the new administrator-level account is in fact an exploitation.

Fig. 5 is an example of a security graph 500, implemented in accordance with an embodiment. According to an embodiment, a security graph 500 represents a cloud computing environment, such as the production environment 110 of Fig. 1 above, in a graph database, according to a predefined data schema.

In an embodiment, a cloud computing environment is represented in a graph by mapping resources, principals, enrichments, and the like, to nodes in the security graph 500. In an embodiment, a node is generated in the security graph in response to detecting a cloud entity in a cloud computing environment. In certain embodiments, a resource node is generated to represent a resource, such as a workload. In some embodiments, a principal node is generated to represent a user account, a service account, a role, and the like. In an embodiment, an enrichment node is generated to represent an endpoint connection to a public network (e.g. internet), a vulnerability, an attribute of a workload, and the like.

According to an embodiment, an enrichment node 510 represents internet access, such that any node which is connected (e.g. by an edge) to the enrichment node 510, represents a workload which is able to access the internet. In an embodiment, a resource node 520 represents a gateway workload, which is implemented, for example, as a node in a software container cluster. A second resource node 530 represents a load balancer workload, which is connected by an edge to the gateway resource node 520 (representing a gateway resource), and a network interface node 540 (representing a network interface), according to an embodiment.

In an embodiment, the network interface node 540 is connected to a resource node 550 which represents a virtual machine, such as virtual machine 114 of Fig. 1. The virtual machine 114 includes, according to an embodiment, an operating system represented by OS node 542, an application which is executed on the OS of the virtual machine 114, represented by application node 544, a user account node 546 which represents a user account which is tied to the virtual machine 114, and a vulnerability node 548, which represents a vulnerability which was detected as being present on, or pertaining to, the virtual machine 114. A vulnerability is, for example, an outdated software, a specific open port, a user account with high (i.e., excessive) permissions, any combination thereof, and the like, according to an embodiment.

For example, in an embodiment, an inspector is configured to detect a vulnerability on a disk of the virtual machine 114. A node is generated to represent the virtual machine 114 in the security graph (i.e., resource node 550), a node is generated to represent the vulnerability (i.e., vulnerability node 548), and an edge is generated to connected the resource node 550 to the vulnerability node 548, thereby indicating that the virtual machine 114 includes the detected vulnerability.

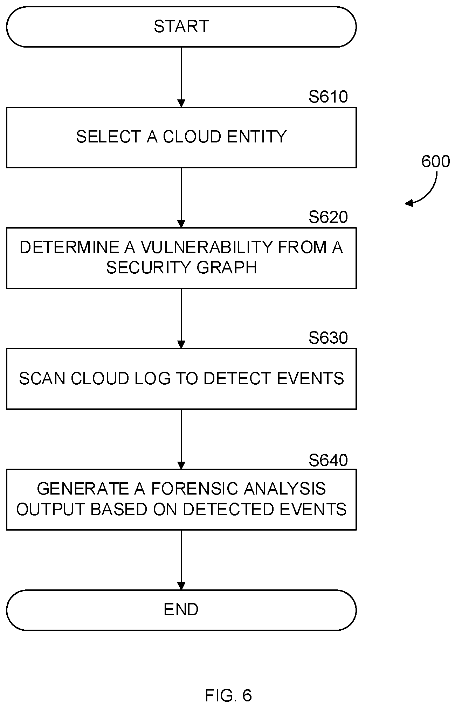

Fig. 6 is a flowchart 600 of a method for generating a forensic analysis report based on a security graph, implemented in accordance with an embodiment.

At S610, a cloud entity is selected. In an embodiment, a cloud entity is, for example, a workload type (e.g. VM, container, serverless function, etc.), an application type (e.g. software application, appliance, OS, gateway, load balancer, etc.), a principal (e.g. user account, service account, etc.), an enrichment, a vulnerability, a combination thereof, and the like. In an embodiment, the cloud entity selection includes an identifier of the cloud entity. An identifier is, for example, a username, an IP address, a name from a namespace, a combination thereof, and the like.

In some embodiments, a cloud entity selection is received through a user interface, such as a graphical user interface. For example, a user may select a cloud entity from a predetermined list, and may further select a relationship between a plurality of selected cloud entities. For example, a user may indicate a selection of a virtual machine (workload type) that runs (relationship) a first application (application type) and has (relationship) a user account (principal) with (relationship) certain privileges and is connected to the internet (enrichment).

**At** S620, a cybersecurity threat is determined. In an embodiment, the cybersecurity threat is determined for the cloud entity based on the security graph. In some embodiments, a cybersecurity threat is, for example, a vulnerability, a misconfiguration, an exploitation, and the like. According to an embodiment, a misconfiguration is, for example, a database which is not password protected, and should be password protected. For example, in an embodiment a forensic analyzer is configured to receive the cloud entity selection, and generate a query for a security graph, which when executed returns a result including a node which matches the selected cloud entity.

For example, in an embodiment, a vulnerability on a workload, is not necessarily exploited, or even exploitable. For example, in an embodiment a workload has a vulnerability which allows broad access, however if the workload is determined not to be accessible to an external network, then the vulnerability is not exploitable from outside of the cloud computing environment in which the workload is deployed. It is therefore beneficial to reference cloud logs to further detect if a vulnerability was exploited.

At S630, a cloud log is inspected to detect an event based on the selected cloud entity and the determined vulnerability. In an embodiment, a cloud log is, for example, a network log, a role log, a combination thereof, and the like. In some embodiments, a plurality of logs are inspected to detect an event, a plurality of events, and the like.

In an embodiment, a forensic analyzer is configured to inspect a cloud log, based on data from a security graph. For example, according to an embodiment, the forensic analyzer is configured to query the security graph based on the cloud entity selection, and receive a node identifier, node attributes, identifiers of enrichment nodes connected to the cloud entity, and the like.

In certain embodiments, node attributes correspond to data field values, such as a unique identifier, an IP address, a workload type, a user account identifier, an authentication status, a combination thereof, and the like. In some embodiments, the forensic analyzer is configured to extract values of the data fields from an output received from the security graph, and perform a search on a cloud log for the extracted values. In an embodiment, an event is detected when a match is generated between a data field value of the event, and a value extracted from an output of the security graph query.

At S640, a forensic analysis output is generated. In an embodiment, the forensic analysis output includes at least a portion of the cloud log, having the detected events. In certain embodiments, the forensic analysis output is stored in place of a cloud log. This is advantageous as a cloud log often requires a large amount of storage as it can easily include millions of events. By storing smaller, relevant logs, which include only records which are relevant, for example, to vulnerable resources, storage space is saved, while ensuring that the most relevant information remains stored. In some embodiments, a time-based portion of the cloud log is stored (e.g., the last 48 hours of events). In certain embodiments, a number-based portion of the cloud log is stored (e.g., the last 10,000 records). Storing a forensic analysis output (i.e., a compact forensic event log) thus allows, in an embodiment, to preserve information and data which is beneficial to detect suspicious events, perform cybersecurity forensics, and the like.

Furthermore, in an embodiment, by generating the forensic analysis output, a user can significantly reduce the amount of information they need to sift through in order to determine if a vulnerability resulted in an exploitation of the same. A cloud log may contain, even for a small window of time, a massive amount of information which is time consuming for a human to sift through, in order to find an indication that a vulnerability was exploited. By determining what are relevant events based on the security graph, and only providing the relevant events to the user, the amount of information which the user sifts through is reduced, and therefore it is beneficial.

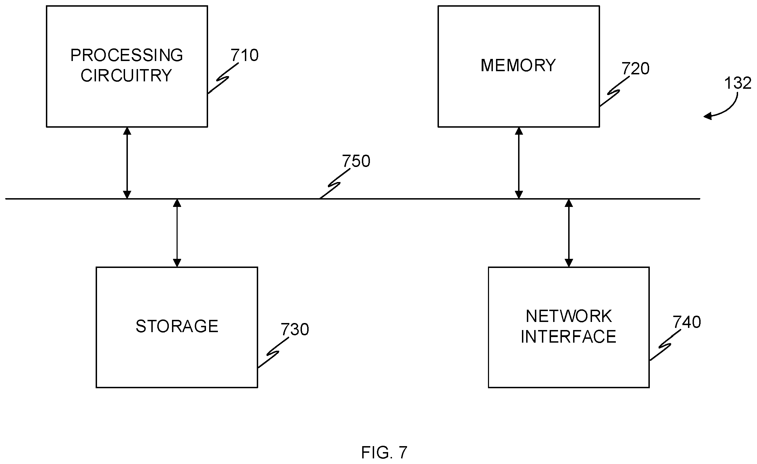

Fig. 7 is an example schematic diagram of a forensic analyzer 132 according to an embodiment. The forensic analyzer 132 includes a processing circuitry 710 coupled to a memory 720, a storage 730, and a network interface 740. In an embodiment, the components of the forensic analyzer 700 may be communicatively connected via a bus 750.

The processing circuitry 710 may be realized as one or more hardware logic components and circuits. For example, and without limitation, illustrative types of hardware logic components that can be used include field programmable gate arrays (FPGAs), application-specific integrated circuits (ASICs), Application-specific standard products (ASSPs), system-on-a-chip systems (SOCs), graphics processing units (GPUs), tensor processing units (TPUs), general-purpose microprocessors, microcontrollers, digital signal processors (DSPs), and the like, or any other hardware logic components that can perform calculations or other manipulations of information.

**The** memory 720 may be volatile (e.g., random access memory, etc.), non-volatile (e.g., read only memory, flash memory, etc.), or a combination thereof.

In one configuration, software for implementing one or more embodiments disclosed herein may be stored in the storage 730. In another configuration, the memory 720 is configured to store such software. Software shall be construed broadly to mean any type of instructions, whether referred to as software, firmware, middleware, microcode, hardware description language, or otherwise. Instructions may include code (e.g., in source code format, binary code format, executable code format, or any other suitable format of code). The instructions, when executed by the processing circuitry 510, cause the processing circuitry 710 to perform the various processes described herein.

The storage 730 may be magnetic storage, optical storage, and the like, and may be realized, for example, as flash memory or other memory technology, or any other medium which can be used to store the desired information.

The network interface 740 allows the forensic analyzer 132 to communicate with, for example, a security graph, a cloud environment, and the like.

It should be understood that the embodiments described herein are not limited to the specific architecture illustrated in Fig. 7, and other architectures may be equally used without departing from the scope of the disclosed embodiments.

The various embodiments disclosed herein can be implemented as hardware, firmware, software, or any combination thereof. Moreover, the software is preferably implemented as an application program tangibly embodied on a program storage unit or computer readable medium consisting of parts, or of certain devices and/or a combination of devices. The application program may be uploaded to, and executed by, a machine comprising any suitable architecture. Preferably, the machine is implemented on a computer platform having hardware such as one or more central processing units ("CPUs"), a memory, and input/output interfaces. The computer platform may also include an operating system and microinstruction code. The various processes and functions described herein may be either part of the microinstruction code or part of the application program, or any combination thereof, which may be executed by a CPU, whether or not such a computer or processor is explicitly shown. In addition, various other peripheral units may be connected to the computer platform such as an additional data storage unit and a printing unit. Furthermore, a non-transitory computer readable medium is any computer readable medium except for a transitory propagating signal.

All examples and conditional language recited herein are intended for pedagogical purposes to aid the reader in understanding the principles of the disclosed embodiment and the concepts contributed by the inventor to furthering the art, and are to be construed as being without limitation to such specifically recited examples and conditions. Moreover, all statements herein reciting principles, aspects, and embodiments of the disclosed embodiments, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

It should be understood that any reference to an element herein using a designation such as "first," "second," and so forth does not generally limit the quantity or order of those elements. Rather, these designations are generally used herein as a convenient method of distinguishing between two or more elements or instances of an element. Thus, a reference to first and second elements does not mean that only two elements may be employed there or that the first element must precede the second element in some manner. Also, unless stated otherwise, a set of elements comprises one or more elements.

As used herein, the phrase "at least one of" followed by a listing of items means that any of the listed items can be utilized individually, or any combination of two or more of the listed items can be utilized. For example, if a system is described as including "at least one of A, B, and C," the system can include A alone; B alone; C alone; 2A; 2B; 2C; 3A; A and B in combination; B and C in combination; A and C in combination; A, B, and C in combination; 2A and C in combination; A, 3B, and 2C in combination; and the like.

## Claims

1. A method for generating a compact forensic event log based on a cloud log (118, 200, 300, 400), comprising:
traversing a security graph to detect a node representing a cloud entity (112, 114, 116) in a cloud computing environment deployed on a cloud computing infrastructure, wherein the security graph includes a representation of the cloud computing environment;
detecting a node representing a cybersecurity threat connected to the node representing the cloud entity (112, 114, 116);
parsing a cloud log (118, 200, 300, 400) of the cloud computing environment to detect a data record, the data record including an attribute of the node representing the cloud entity (112, 114, 116);
selecting data records that include the attribute of the detected node and are relevant to vulnerable resources;
generating a compact forensic event log including the selected data records; and
storing the compact forensic event log in place of the cloud log (118, 200, 300, 400), whereby a storage space is reduced while ensuring that relevant information remains stored.

2. The method of claim 1, further comprising:
receiving an identifier of the cloud entity (112, 114, 116); and
traversing the security graph (134) further based on the received identifier to detect the node representing the cloud entity (112, 114, 116).

3. The method of claim 1, further comprising:
detecting the data record further based on an identifier of the cybersecurity threat (548).

4. The method of claim 1, further comprising:
generating the compact forensic event log in response to detecting that the node representing the cloud entity (112, 114, 116) is connected to the node representing the cybersecurity threat (548).

5. The method of claim 1, wherein the cloud log (118, 200, 300, 400) is any one of: a network log (118, 200), and a role log (300, 400).

6. The method of claim 1, wherein the attribute is any one of: a unique identifier, an IP address, a workload type (112, 114, 116), a user account name, a role, and an authentication status.

7. The method of claim 1, wherein the cybersecurity threat (548) is any one of: a vulnerability, a misconfiguration, and an exploit.

8. The method of claim 1, further comprising:
generating the compact forensic event log based on a plurality of cloud logs (118, 200, 300, 400), each cloud log parsed to detect a data record including the attribute of the node representing the cloud entity (112, 114, 116).

9. The method of claim 1, further comprising:
storing the compact forensic event log in a storage (730); and
storing a time-based portion of the cloud log (118, 200, 300, 400) in the storage (730).

10. A non-transitory computer readable medium having stored thereon instructions for causing a processing circuitry (710) to execute a process, the process comprising:
traversing a security graph (134) to detect a node representing a cloud entity (112, 114, 116) in a cloud computing environment deployed on a cloud computing infrastructure, wherein the security graph (134) includes a representation of the cloud computing environment;
detecting a node representing a cybersecurity threat (548) connected to the node representing the cloud entity (112, 114, 116);
parsing a cloud log (118, 200, 300, 400) of the cloud computing environment to detect a data record, the data record including an attribute of the node representing the cloud entity (112, 114, 116);
selecting data records that include the attribute of the detected node and are relevant to vulnerable resources;
generating a compact forensic event log including the selected data records; and
storing the compact forensic event log in place of the cloud log, whereby a storage space is reduced while ensuring that relevant information remains stored.

11. A system for generating a compact forensic event log based on a cloud log (118, 200, 300, 400), comprising:
a processing circuitry (710); and
a memory (720), the memory (720) containing instructions that, when executed by the processing circuitry (710), configure the system to:
traverse a security graph (134) to detect a node representing a cloud entity (112, 114, 116) in a cloud computing environment deployed on a cloud computing infrastructure, wherein the security graph (134) includes a representation of the cloud computing environment;
detect a node representing a cybersecurity threat (548) connected to the node representing the cloud entity (112, 114, 116);
parse a cloud log (118, 200, 300, 400) of the cloud computing environment to detect a data record, the data record including an attribute of the node representing the cloud entity (112, 114, 116);
select data records that include the attribute of the detected node and are relevant to vulnerable resources;
generate a compact forensic event log including the selected data records; and
store the compact forensic event log in place of the cloud log, whereby a storage space is reduced while ensuring that relevant information remains stored.

12. The system of claim 11, wherein the memory (720) contains further instructions which when executed by the processing circuitry (710), further configure the system to:
receive an identifier of the cloud entity (112, 114, 116); and
traverse the security graph (134) further based on the received identifier to detect the node representing the cloud entity (112, 114, 116).

13. The system of claim 11, wherein the memory (720) contains further instructions which when executed by the processing circuitry (710), further configure the system to:
detect the data record further based on an identifier of the cybersecurity threat (548).

14. The system of claim 11, wherein the memory (720) contains further instructions which when executed by the processing circuitry (710), further configure the system to:
generate the compact forensic event log in response to detecting that the node representing the cloud entity (112, 114, 116) is connected to the node representing the cybersecurity threat (548).

15. The system of claim 11, wherein the memory (720) contains further instructions which when executed by the processing circuitry (710), further configure the system to:
store the compact forensic event log in a storage (730); and
store a time-based portion of the cloud log (118, 200, 300, 400) in the storage (730).

## Patentansprüche

1. Verfahren zum Erzeugen eines kompakten forensischen Ereignisprotokolls basierend auf einem Cloud-Protokoll (118, 200, 300, 400), umfassend:
Durchlaufen eines Sicherheitsgraphen, um einen Knoten zu erkennen, der eine Cloud-Entität (112, 114, 116) in einer Cloud-Computing-Umgebung darstellt, die auf einer Cloud-Computing-Infrastruktur bereitgestellt ist, wobei der Sicherheitsgraph eine Darstellung der Cloud-Computing-Umgebung beinhaltet;
Erkennen eines Knotens, der eine Cybersicherheitsbedrohung darstellt und mit dem Knoten verbunden ist, der die Cloud-Entität (112, 114, 116) darstellt;
Parsen eines Cloud-Protokolls (118, 200, 300, 400) der Cloud-Computing-Umgebung, um einen Datensatz zu erkennen, wobei der Datensatz ein Attribut des Knotens beinhaltet, der die Cloud-Entität (112, 114, 116) darstellt;
Auswählen von Datensätzen, die das Attribut des erkannten Knotens beinhalten und für verwundbare Ressourcen relevant sind;
Erzeugen eines kompakten forensischen Ereignisprotokolls, das die ausgewählten Datensätze beinhaltet; und
Speichern des kompakten forensischen Ereignisprotokolls anstelle des Cloud-Protokolls (118, 200, 300, 400), wodurch Speicherplatz reduziert wird, während sichergestellt wird, dass relevante Informationen gespeichert bleiben.

2. Verfahren nach Anspruch 1, ferner umfassend:
Empfangen einer Kennung der Cloud-Entität (112, 114, 116); und
Durchlaufen des Sicherheitsgraphen (134) ferner basierend auf der empfangenen Kennung, um den Knoten zu erkennen, der die Cloud-Entität (112, 114, 116) darstellt.

3. Verfahren nach Anspruch 1, ferner umfassend:
Erkennen des Datensatzes ferner basierend auf einer Kennung der Cybersicherheitsbedrohung (548).

4. Verfahren nach Anspruch 1, ferner umfassend:
Erzeugen des kompakten forensischen Ereignisprotokolls als Reaktion auf das Erkennen, dass der Knoten, der die Cloud-Entität (112, 114, 116) darstellt, mit dem Knoten verbunden ist, der die Cybersicherheitsbedrohung (548) darstellt.

5. Verfahren nach Anspruch 1, wobei das Cloud-Protokoll (118, 200, 300, 400) eines von Folgendem ist: ein Netzwerkprotokoll (118, 200) und ein Rollenprotokoll (300, 400).

6. Verfahren nach Anspruch 1, wobei das Attribut eines von Folgendem ist: eine eindeutige Kennung, eine IP-Adresse, ein Workload-Typ (112, 114, 116), ein Benutzerkontoname, eine Rolle und ein Authentifizierungsstatus.

7. Verfahren nach Anspruch 1, wobei die Cybersicherheitsbedrohung (548) eines von Folgendem ist: eine Schwachstelle, eine Fehlkonfiguration und ein Exploit.

8. Verfahren nach Anspruch 1, ferner umfassend:
Erzeugen des kompakten forensischen Ereignisprotokolls basierend auf einer Vielzahl von Cloud-Protokollen (118, 200, 300, 400), wobei jedes Cloud-Protokoll geparst wird, um einen Datensatz zu erkennen, der das Attribut des Knotens beinhaltet, der die Cloud-Entität (112, 114, 116) darstellt.

9. Verfahren nach Anspruch 1, ferner umfassend:
Speichern des kompakten forensischen Ereignisprotokolls in einem Datenspeicher (730); und
Speichern eines zeitbasierten Abschnitts des Cloud-Protokolls (118, 200, 300, 400) in dem Datenspeicher (730).

10. Nichtflüchtiges computerlesbares Medium, auf dem Anweisungen gespeichert sind, um eine Verarbeitungsschaltung (710) zu veranlassen, einen Prozess auszuführen, wobei der Prozess umfasst:
Durchlaufen eines Sicherheitsgraphen (134), um einen Knoten zu erkennen, der eine Cloud-Entität (112, 114, 116) in einer Cloud-Computing-Umgebung darstellt, die auf einer Cloud-Computing-Infrastruktur bereitgestellt ist, wobei der Sicherheitsgraph (134) eine Darstellung der Cloud-Computing-Umgebung beinhaltet;
Erkennen eines Knotens, der eine Cybersicherheitsbedrohung (548) darstellt und mit dem Knoten verbunden ist, der die Cloud-Entität (112, 114, 116) darstellt;
Parsen eines Cloud-Protokolls (118, 200, 300, 400) der Cloud-Computing-Umgebung, um einen Datensatz zu erkennen, wobei der Datensatz ein Attribut des Knotens beinhaltet, der die Cloud-Entität (112, 114, 116) darstellt;
Auswählen von Datensätzen, die das Attribut des erkannten Knotens beinhalten und für verwundbare Ressourcen relevant sind;
Erzeugen eines kompakten forensischen Ereignisprotokolls, das die ausgewählten Datensätze beinhaltet; und
Speichern des kompakten forensischen Ereignisprotokolls anstelle des Cloud-Protokolls, wodurch Speicherplatz reduziert wird, während sichergestellt wird, dass relevante Informationen gespeichert bleiben.

11. System zum Erzeugen eines kompakten forensischen Ereignisprotokolls basierend auf einem Cloud-Protokoll (118, 200, 300, 400), umfassend:
eine Verarbeitungsschaltung (710); und
einen Speicher (720), wobei der Speicher (720) Anweisungen enthält, die, wenn sie von der Verarbeitungsschaltung (710) ausgeführt werden, das System dazu konfigurieren:
einen Sicherheitsgraphen (134) zu durchlaufen, um einen Knoten zu erkennen, der eine Cloud-Entität (112, 114, 116) in einer Cloud-Computing-Umgebung darstellt, die auf einer Cloud-Computing-Infrastruktur bereitgestellt ist, wobei der Sicherheitsgraph (134) eine Darstellung der Cloud-Computing-Umgebung beinhaltet;
einen Knoten zu erkennen, der eine Cybersicherheitsbedrohung (548) darstellt und mit dem Knoten verbunden ist, der die Cloud-Entität (112, 114, 116) darstellt;
ein Cloud-Protokoll (118, 200, 300, 400) der Cloud-Computing-Umgebung zu parsen, um einen Datensatz zu erkennen, wobei der Datensatz ein Attribut des Knotens beinhaltet, der die Cloud-Entität (112, 114, 116) darstellt;
Datensätze auszuwählen, die das Attribut des erkannten Knotens beinhalten und für verwundbare Ressourcen relevant sind;
ein kompaktes forensisches Ereignisprotokoll zu erzeugen, das die ausgewählten Datensätze beinhaltet; und
das kompakte forensische Ereignisprotokoll anstelle des Cloud-Protokolls zu speichern, wodurch Speicherplatz reduziert wird, während sichergestellt wird, dass relevante Informationen gespeichert bleiben.

12. System nach Anspruch 11, wobei der Speicher (720) weitere Anweisungen enthält, die, wenn sie von der Verarbeitungsschaltung (710) ausgeführt werden, das System ferner dazu konfigurieren:
eine Kennung der Cloud-Entität (112, 114, 116) zu empfangen; und
den Sicherheitsgraphen (134) ferner basierend auf der empfangenen Kennung zu durchlaufen, um den Knoten zu erkennen, der die Cloud-Entität (112, 114, 116) darstellt.

13. System nach Anspruch 11, wobei der Speicher (720) weitere Anweisungen enthält, die, wenn sie von der Verarbeitungsschaltung (710) ausgeführt werden, das System ferner dazu konfigurieren:
den Datensatz ferner basierend auf einer Kennung der Cybersicherheitsbedrohung (548) zu erkennen.

14. System nach Anspruch 11, wobei der Speicher (720) weitere Anweisungen enthält, die, wenn sie von der Verarbeitungsschaltung (710) ausgeführt werden, das System ferner dazu konfigurieren:
das kompakte forensische Ereignisprotokoll als Reaktion auf das Erkennen zu erzeugen, dass der Knoten, der die Cloud-Entität (112, 114, 116) darstellt, mit dem Knoten verbunden ist, der die Cybersicherheitsbedrohung (548) darstellt.

15. System nach Anspruch 11, wobei der Speicher (720) weitere Anweisungen enthält, die, wenn sie von der Verarbeitungsschaltung (710) ausgeführt werden, das System ferner dazu konfigurieren:
das kompakte forensische Ereignisprotokoll in einem Datenspeicher (730) zu speichern; und
einen zeitbasierten Abschnitt des Cloud-Protokolls (118, 200, 300, 400) in dem Datenspeicher (730) zu speichern.

## Revendications

1. Procédé de génération d'un journal d'événements forensique compact sur la base d'un journal cloud (118, 200, 300, 400), comprenant :
le parcours d'un graphe de sécurité pour détecter un nœud représentant une entité cloud (112, 114, 116) dans un environnement informatique cloud déployé sur une infrastructure informatique cloud, dans lequel le graphe de sécurité inclut une représentation de l'environnement informatique cloud ;
la détection d'un nœud représentant une menace de cybersécurité connecté au nœud représentant l'entité cloud (112, 114, 116) ;
l'analyse syntaxique d'un journal cloud (118, 200, 300, 400) de l'environnement informatique cloud pour détecter un enregistrement de données, l'enregistrement de données incluant un attribut du nœud représentant l'entité cloud (112, 114, 116) ;
la sélection d'enregistrements de données qui incluent l'attribut du nœud détecté et qui sont pertinents pour des ressources vulnérables ;
la génération d'un journal d'événements forensique compact incluant les enregistrements de données sélectionnés ; et
le stockage du journal d'événements forensique compact à la place du journal cloud (118, 200, 300, 400), de sorte qu'un espace de stockage est réduit tout en garantissant que des informations pertinentes restent stockées.

2. Procédé selon la revendication 1, comprenant en outre :
la réception d'un identifiant de l'entité cloud (112, 114, 116) ; et
le parcours du graphe de sécurité (134) en outre sur la base de l'identifiant reçu pour détecter le nœud représentant l'entité cloud (112, 114, 116).

3. Procédé selon la revendication 1, comprenant en outre :
la détection de l'enregistrement de données en outre sur la base d'un identifiant de la menace de cybersécurité (548).

4. Procédé selon la revendication 1, comprenant en outre :
la génération du journal d'événements forensique compact en réponse à la détection du fait que le nœud représentant l'entité cloud (112, 114, 116) est connecté au nœud représentant la menace de cybersécurité (548).

5. Procédé selon la revendication 1, dans lequel le journal cloud (118, 200, 300, 400) est l'un quelconque parmi : un journal réseau (118, 200) et un journal des rôles (300, 400).

6. Procédé selon la revendication 1, dans lequel l'attribut est l'un quelconque parmi : un identifiant unique, une adresse IP, un type de charge de travail (112, 114, 116), un nom de compte utilisateur, un rôle et un statut d'authentification.

7. Procédé selon la revendication 1, dans lequel la menace de cybersécurité (548) est l'une quelconque parmi : une vulnérabilité, une mauvaise configuration et un exploit.

8. Procédé selon la revendication 1, comprenant en outre :
la génération du journal d'événements forensique compact sur la base d'une pluralité de journaux cloud (118, 200, 300, 400), chaque journal cloud étant analysé syntaxiquement pour détecter un enregistrement de données incluant l'attribut du nœud représentant l'entité cloud (112, 114, 116).

9. Procédé selon la revendication 1, comprenant en outre :
le stockage du journal d'événements forensique compact dans un dispositif de stockage (730) ; et le stockage d'une partie basée sur le temps du journal cloud (118, 200, 300, 400) dans le dispositif de stockage (730).

10. Support lisible par ordinateur non transitoire sur lequel sont stockées des instructions pour amener un circuit de traitement (710) à exécuter un processus, le processus comprenant :
le parcours d'un graphe de sécurité (134) pour détecter un nœud représentant une entité cloud (112, 114, 116) dans un environnement informatique cloud déployé sur une infrastructure informatique cloud, dans lequel le graphe de sécurité (134) inclut une représentation de l'environnement informatique cloud ;
la détection d'un nœud représentant une menace de cybersécurité (548) connecté au nœud représentant l'entité cloud (112, 114, 116) ;
l'analyse syntaxique d'un journal cloud (118, 200, 300, 400) de l'environnement informatique cloud pour détecter un enregistrement de données, l'enregistrement de données incluant un attribut du nœud représentant l'entité cloud (112, 114, 116) ;
la sélection d'enregistrements de données qui incluent l'attribut du nœud détecté et qui sont pertinents pour des ressources vulnérables ;
la génération d'un journal d'événements forensique compact incluant les enregistrements de données sélectionnés ; et
le stockage du journal d'événements forensique compact à la place du journal cloud, de sorte qu'un espace de stockage est réduit tout en garantissant que des informations pertinentes restent stockées.

11. Système de génération d'un journal d'événements forensique compact sur la base d'un journal cloud (118, 200, 300, 400), comprenant :
un circuit de traitement (710) ; et
une mémoire (720), la mémoire (720) contenant des instructions qui, lorsqu'elles sont exécutées par le circuit de traitement (710), configurent le système pour :
parcourir un graphe de sécurité (134) pour détecter un nœud représentant une entité cloud (112, 114, 116) dans un environnement informatique cloud déployé sur une infrastructure informatique cloud, dans lequel le graphe de sécurité (134) inclut une représentation de l'environnement informatique cloud ;
détecter un nœud représentant une menace de cybersécurité (548) connecté au nœud représentant l'entité cloud (112, 114, 116) ;
analyser syntaxiquement un journal cloud (118, 200, 300, 400) de l'environnement informatique cloud pour détecter un enregistrement de données, l'enregistrement de données incluant un attribut du nœud représentant l'entité cloud (112, 114, 116) ;
sélectionner des enregistrements de données qui incluent l'attribut du nœud détecté et qui sont pertinents pour des ressources vulnérables ;
générer un journal d'événements forensique compact incluant les enregistrements de données sélectionnés ; et
stocker le journal d'événements forensique compact à la place du journal cloud, de sorte qu'un espace de stockage est réduit tout en garantissant que des informations pertinentes restent stockées.

12. Système selon la revendication 11, dans lequel la mémoire (720) contient des instructions supplémentaires qui, lorsqu'elles sont exécutées par le circuit de traitement (710), configurent en outre le système pour :
recevoir un identifiant de l'entité cloud (112, 114, 116) ; et
parcourir le graphe de sécurité (134) en outre sur la base de l'identifiant reçu pour détecter le nœud représentant l'entité cloud (112, 114, 116).

13. Système selon la revendication 11, dans lequel la mémoire (720) contient des instructions supplémentaires qui, lorsqu'elles sont exécutées par le circuit de traitement (710), configurent en outre le système pour :
détecter l'enregistrement de données en outre sur la base d'un identifiant de la menace de cybersécurité (548).

14. Système selon la revendication 11, dans lequel la mémoire (720) contient des instructions supplémentaires qui, lorsqu'elles sont exécutées par le circuit de traitement (710), configurent en outre le système pour :
générer le journal d'événements forensique compact en réponse à la détection du fait que le nœud représentant l'entité cloud (112, 114, 116) est connecté au nœud représentant la menace de cybersécurité (548).

15. Système selon la revendication 11, dans lequel la mémoire (720) contient des instructions supplémentaires qui, lorsqu'elles sont exécutées par le circuit de traitement (710), configurent en outre le système pour :
stocker le journal d'événements forensique compact dans un dispositif de stockage (730) ; et
stocker une partie basée sur le temps du journal cloud (118, 200, 300, 400) dans le dispositif de stockage (730).
